Europäisches Patentamt

European Patent Office

Office européen des brevets

(19)

(11) Veröffentlichungsnummer : **0 023 881**
**B2**

(12)

# NEUE EUROPÄISCHE PATENTSCHRIFT

(45) Veröffentlichungstag der neuen Patentschrift :
**01.02.89**

(21) Anmeldenummer : **80730047.0**

(22) Anmeldetag : **03.07.80**

(51) Int. Cl.⁴ : **B 60 B 3/16**, B 60 B 11/06

---

(54) **Nutzfahrzeugrad für Einzel- und Zwillingsanordnung.**

---

(30) Priorität : **31.07.79 DE 2931400**

(43) Veröffentlichungstag der Anmeldung :
**11.02.81 Patentblatt 81/06**

(45) Bekanntmachung des Hinweises auf die Patenterteilung : **11.04.84 Patentblatt 84/15**

(45) Bekanntmachung des Hinweises auf die Entscheidung über den Einspruch : **01.02.89 Patentblatt 89/05**

(84) Benannte Vertragsstaaten :
**AT BE FR GB IT NL SE**

(56) Entgegenhaltungen :
**BE—A— 449 213
DE—A— 2 629 511
DE—A— 2 635 983
DE—A— 2 636 996
FR—A— 631 858
US—A— 1 883 641
US—A— 2 545 130
US—A— 2 548 107
US—A— 3 138 407
US—A— 3 366 421
ATZ, Automobiltechnische Zeitschrift, 1978, Heft 3,
Seiten 107-113**

(73) Patentinhaber : **Mannesmann Kronprinz AG
Weyerstrasse 112/114
D-5650 Solingen 11 (DE)**

(72) Erfinder : **Opel, Paul, Dipl.-Phys.
An der Eiche 16
D-4018 Langenfeld (DE)**
Erfinder : **Herbst, Klaus, Dipl.-Ing.
Weyerstrasse 134
D-5650 Solingen 11 (DE)**
Erfinder : **Brinkmann, Heinz, Ing. grad.
Rotdornwerg 5
D-4800 Hagen (DE)**
Erfinder : **Lüders, Albrecht, Dr.,Ing.
Starenweg 20
D-5657 Haan (DE)**
Erfinder : **Wolsdorf, Hans Peter, Dipl.-Ing.
Birkenweg 6
D-7307 Aichwald-Krummhardt (DE)**

(74) Vertreter : **Meissner, Peter E., Dipl.-Ing. et al
Patentanwälte Dipl.-Ing. Walter Meissner Dipl.-Ing.
Peter E. Meissner Dipl.-Ing. Hans-Joachim Presting
Herbertstrasse 22
D-1000 Berlin 33 (DE)**

**Beschreibung**

Die Erfindung betrifft ein Nutzfahrzeugrad aus Blechmaterial für Einzel- und Zwillingsanordnung mit einer an der Radaußenseite und an der Radinnenseite vorhandenen durch Feinbearbeitung eben ausgebildeten Anlagefläche, die aus einer äußeren und einer inneren ringförmigen Anlagefläche besteht, die durch Vertiefungen an der Spiegelfläche des Rades gebildet sind und von denen die innere Anlagefläche Unterbrechungen aufweist, die im Bereich der Bolzenlöcher angeordnet sind.

Es ist aus der DE-PS 2 636 996 bekannt, bei Nutzfahrzeugrädern mit einem gemeinsamen Radnabenflansch für die Bremstrommel und die Radscheibe die außerhalb des Lochkreises der Radbolzen angebrachte ringförmige Anlagefläche durch Feinbearbeitung, z. B. durch Schleifen, Drehen oder Planschlagen, eben auszubilden. Diese bekannten Nutzfahrzeugräder haben einen ebenen Spiegel. Es kann bei einigen Radtypen durch Überbeanspruchungen vorkommen, daß Risse im Spiegel auftreten. Die Anlageflächen zwischen den Bolzenlöchern am Bremstrommelflansch und am Radspiegel und bei Zwillingsrädern auch die einander zugekehrten Spiegelflächen verändern den Abstand zueinander, d. h. « atmen » bei jeder Radumdrehung um einige hundertstel Millimeter. Dadurch wird bei Regenwetter Feuchtigkeit zwischen diese Anlageflächen hineingesaugt. Als Folge entsteht hier Korrosion, die sich sehr negativ auf die Lebensdauer auswirkt.

Ein Rad der gattungsgemäßen Art ist aus der DE-A-26 35 983 bekannt. Um bei sehr starkem Festspannen der Radbefestigungselemente eine befürchtete Mittenlochverformung zu vermeiden, wird dort vorgeschlagen, im Bereich der Bolzenlöcher an der inneren ringförmigen Anlagefläche sowie auch im Mittenloch Aussparungen anzubringen. Durch diese Schrift wird indes auch die Erfahrung vermittelt, daß die Übertragung von Kräften über eine innere Anlagefläche unwesentlich ist, wobei davon ausgegangen wird, daß eine äußere und eine innere ringförmige Anlagefläche vorhanden ist. Hieraus ergibt sich, daß die Kraftübertragung von der Radscheibe auf den Radnabenflansch bzw. den Flansch der Bremstrommel im wesentlichen über die äußere ringförmige Anlagefläche erfolgt, wie es in der bereits behandelten DE-PS 26 36 996 beschrieben ist. Über diese bekannte Ausführung der Anlageflächen einer Radscheibe geht die Offenbarung der Entgegenhaltung DE-OS 26 35 983 nicht hinaus.

Aufgabe der Erfindung ist es, die bekanntgewordenen Nachteile zu beseitigen und ein Fahrzeugrad ausgehend von der älteren Nutzfahrzeugradausführung im Spiegelbereich derart zu verbessern, daß die Dauerfestigkeit der Radschüssel erhöht wird.

Diese Aufgabe wird gemäß der Erfindung dadurch gelöst, daß die äußere ringförmige Anlagefläche Aussparungen bzw. Unterbrechungen aufweist, die im Bereich der Bolzenlöcher angeordnet und radial nach außen gerichtet sind.

Die weitere Ausgestaltung des Erfindungsgegenstandes geht aus den Merkmalen der abhängigen Ansprüche hervor.

Die Ausnehmungen bzw. Vertiefungen am Radscheibenspiegel können durch Pressen oder Prägen auf einer Presse hergestellt werden. Für die angestrebte Erhöhung der Dauerfestigkeit ist hin Rücksprung von 0,2 bis 0,5 mm zwischen den Anlageflächenteilen und der Vertiefung ausreichend.

Obwohl die Herstellung von Ausnehmungen bzw. Vertiefungen am Spiegel der Radscheibe z. B. durch Pressen, verhältnismäßig aufwendig ist, bringt diese Maßnahme jedoch eine so wesentliche erhöhte Lebensdauer der Radscheibe, daß der Aufwand mehr als ausgeglichen wird. Ein weiterer Vorteil besteht darin, daß das unangenehme « Bremsrubbeln » verringert wird.

Da die Anlageflächen im wesentlichen auf die segmentartigen Streifen zwischen den Bolzenlöchern beschränkt werden, ist hier die Flächenpressung wesentlich höher als bisher, wodurch das vorstehend angegebene « Atmen » mindestens stark vermindert wird, wenn nicht gar praktisch ganz vermieden wird.

Die Erfindung wird anhand der beigefügten Zeichnung nachfolgend näher erläutert.

Von den Figuren zeigen :

Figur 1 eine Teil eines Querschnittes durch ein Fahrzeugrad mit Flachbettfelge und einer Bremstrommel, die zusammen an einer Nabe mit Schraubverbindungen gehalten sind,

Figur 2 eine Ansicht auf die Spiegelfläche der Radscheibe, die dem Flansch der Bremstrommel gegenüberliegt,

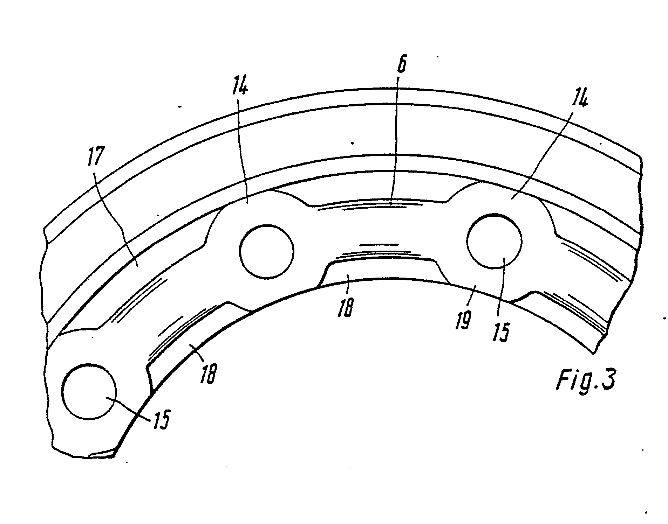

Figur 3 eine Ansicht entsprechend Fig. 2, wobei die äußere ringförmige Anlagefläche Unterbrechungen aufweist.

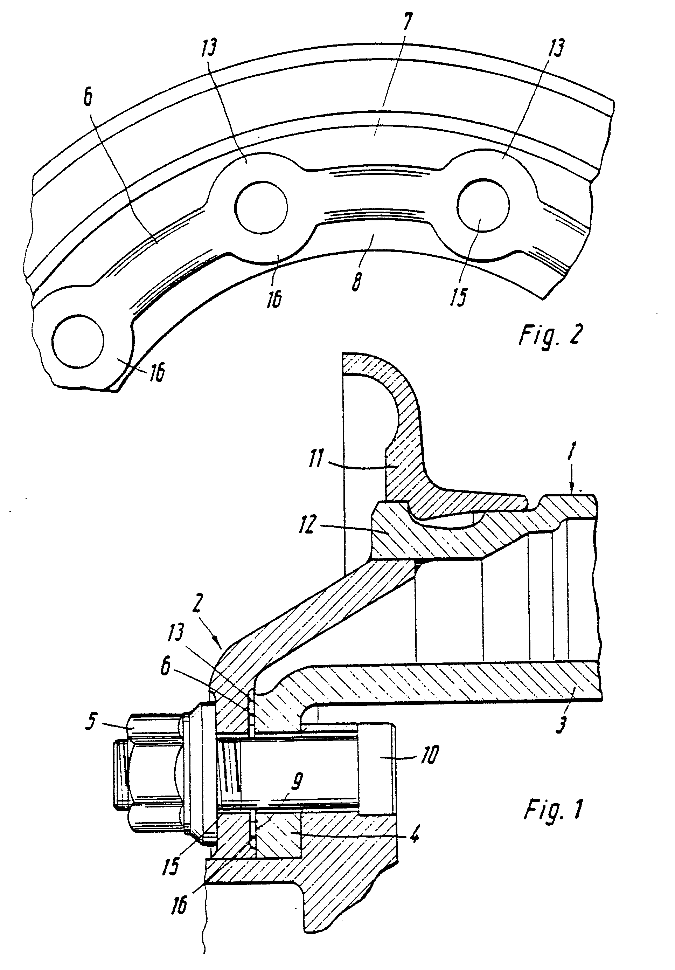

Ein Fahrzeugrad nach Fig. 1 besteht aus einer Felge 1 und einer Radscheibe 2 sowie einem kombinierten Seitenring 11. Der äußere Rand der Radscheibe 2 ist unter dem im Querschnitt hakenförmigen Ende 12 der Felge 1 angeschweißt. Die Radscheibe 2 liegt mit der inneren Spiegelpartie an der Bremstrommel 3 an und ist hier mit Schrauben 10 und Muttern 5 befestigt. An der inneren Spiegelpartie ist eine ringförmige Aussparung 6 dadurch entstanden, daß die Radscheibe 2 an der Spiegelfläche im Bereich der Bolzenlöcher 15 und dazwischen durch Pressen oder Prägen vertieft ist, so daß eine äußere ringförmige Anlagefläche 7 und eine innere ringförmige Anlagefläche 8 entstehen. Die den Anlageflächen 7 und 8 gegenüberliegende Fläche am Flansch 4 der Bremstrommel 3 kann hierbei ebenflächig oder ebenfalls mit einer entsprechenden ringförmigen Aussparung versehen sein. Der Bereich 9 der Spiegelpartie, der an der äußeren Anlagefläche 7 bei der Montage des Fahrzeugrades zur Anlage kommt, wird gemäß der älteren Erfindung derart bearbeitet, daß alle Anlagepunkte oder -flächen in einer Ebene liegen. Hierdurch wird gewährleistet, daß ein Verzug der Bremstrommel 3 nicht mehr auftritt.

Um bei einigen Radtypen Spannungsspitzen und damit Risse im Spiegel der Radscheibe 2 im Bereich zwischen den Bolzenlöchern 15 zu vermeiden, ist die äußere ringförmige Anlagefläche 7 zwischen Radscheibe 2 und Bremstrommel 3 mit Aussparungen 13 bzw. Unterbrechungen 14 versehen, die im Bereich der Bolzenlöcher 15 angeordnet sind. Auch an der inneren ringförmigen Anlagefläche 8 sind Aussparungen 16 bzw. Unterbrechungen 19 vorhanden. Durch das Anordnen des Unterbrechungen 14 in der äußeren (7) sowie der Unterbrechungen 19 in der Inneren (8) Anlagefläche sind die oben angegebenen ringförmigen Anlageflächen in segmentartige Streifen 17 bzw. 18 aufgeteilt.

Zusätzlich zur Ausnehmung 6 kann eine entsprechende ringförmige Vertiefung am Flansch der Bremstrommel vorgesehen sein.

Da zumindest die elastische Verformung im Bereich der Radmuttern am stärksten ist, ist es vorteilhaft, die ringförmigen Bereiche an jedem Bolzenloch 15 tiefer zu legen als die Vertiefungen 6 zwischen den Bolzenlöchern 15.

**Patentansprüche**

1. Nutzfahrzeugrad aus Blechmaterial für Einzel- und Zwillingsanordnung mit einer an der Radaußenseite und an der Radinnenseite vorhandenen durch Feinbearbeibeitung eben ausgebildeten Anlagefläche, die aus einer äußeren und einer inneren ringförmigen Anlagefläche (7, 8 bzw. 17, 18) besteht, die durch Vertiefungen an der Spiegelfläche des Rades gebildet sind und von denen die innere Anlagefläche (18) Unterbrechungen (19) aufweist, die im Bereich der Bolzenlöcher (15) angeordnet sind, dadurch gekennzeichnet, daß die äußere (7 bzw. 17) ringförmige Anlagefläche Aussparungen (13) bzw. Unterbrechungen (14) aufweist, die im Bereich der Bolzenlöcher (15) angeordnet und radial nach außen gerichtet sind.

2. Rad nach Anspruch 1, dadurch gekennzeichnet, daß die innere Anlagefläche (8, 18) durch Flächenteile außerhalb des Bereiches der Bolzenlöcher (15) gebildet ist.

3. Rad nach Anspruch 1, dadurch gekennzeichnet, daß die äußere Anlagefläche (7, 17) durch Flächenteile außerhalb des Bereiches der Bolzenlöcher (15) gebildet ist.

4. Rad nach Anspruch 1 dadurch gekennzeichnet, daß die äußere Anlagefläche (7, 17) gegenüber der inneren Anlagefläche (8, 18) etwas vorsteht.

5. Rad nach Anspruch 1, dadurch gekennzeichnet, daß die ringförmigen Bereiche an jedem Bolzenloch (15) tiefer liegen als die Vertiefungen (6) zwischen den Bolzenlöchern (15).

**Claims**

1. Commercial vehicle wheel of sheet metal for single and twin arrangement with a contact surface present on the outer side of the wheel and on the inner side of the wheel and formed flat by fine machining, which consists of an outer and an inner annular contact surface (7, 8 or 17, 18) which are formed by depressions on the reflector surface of the wheel and of which the inner contact surface (18) has openings (19) which are arranged in the region of the pin holes (15), characterised in that the outer annular contact surface (7 or 17) has recesses (13) or openings (14) which are arranged in the region of the pin holes (15) and are directed radially outwards.

2. Wheel according to Claim 1, characterised in that the inner contact surface (8, 18) is formed by surface parts outside the region of the pin holes (15).

3. Wheel according to Claim 1, characterised in that the outer contact surface (7, 17) is formed by surface parts outside the region of the pin holes (15).

4. Wheel according to Claim 1, characterised in that the outer contact surface (7, 17) projects slightly with respect to the inner contact surface (8, 18).

5. Wheel according to Claim 1, characterised in that the annular regions at each pin hole (15) lie deeper than the depressions (6) between the pin holes (15).

**Revendications**

1. Roue de véhicule utilitaire en tôle, prévue pour un agencement unique ou par paire, pourvue d'une face d'appui qui se trouve sur le côté extérieur et sur le côté intérieur de la roue rectifiée par usinage fin, ladite roue se composant de faces d'appui annulaires extérieure et intérieure (7, 8 ou 17, 18), qui sont formées par des enfoncements sur la face spéculaire de la roue et dont la face d'appui intérieure (18) présente des interruptions (19), agencées dans la zone des trous des boulons (15), caractérisée en ce que la face d'appui annulaire extérieure (7 ou 17) présente des évidements (13) ou des interruptions (14) qui sont agencés dans la zone des trous des boulons (15) et dirigés radialement vers l'extérieur.

2. Roue selon la revendication 1, caractérisée en ce que la face d'appui intérieure (8, 18) est formée, à l'extérieur de la zone des trous des boulons (15), par des portions de face.

3. Roue selon la revendication 1, caractérisée en ce que la face d'appui extérieure (7, 17) est formée, à l'extérieur de la zone des trous des boulons (15), de portions de face.

4. Roue selon la revendication 1, caractérisée en ce que la face d'appui extérieure (7, 17) est un peu en saillie par rapport à la face d'appui intérieure (8, 18).

5. Roue selon la revendication 1, caractérisée en ce que les zones annulaires autour de chaque trou de boulon (15) sont plus profondes que les enfoncements (6) entre les trous des boulons (15).

Fig. 2

Fig. 1

Fig.3